(19) Europäisches Patentamt
European Patent Office
Office européen des brevets

(11) Publication number: 0 183 276
A2

(12) # EUROPEAN PATENT APPLICATION

(21) Application number: 85115191.0

(22) Date of filing: 29.11.85

(51) Int. Cl.[4]: C 08 L 25/04
C 08 K 13/02
//(C08K13/02, 3:22, 5:06, 5:13, 5:13), (C08K13/02, 3:22, 5:06, 5:13, 5:34), (C08L25/04, 23:28, 69:00)

(30) Priority: 30.11.84 JP 251562/84

(43) Date of publication of application: 04.06.86 Bulletin 86/23

(84) Designated Contracting States: DE FR GB NL

(71) Applicant: MITSUBISHI RAYON CO. LTD.
3-19, Kyobashi 2-chome Chuo-Ku
Tokyo 104(JP)

(72) Inventor: Kishida, Kazuo
74-404, Ohno-cho
Saiki-gun Hiroshima-ken(JP)

(72) Inventor: Kawasaki, Hiroshi
2-47-7, Takafunedai Kanazawa-ku
Yokohama-shi Kanagawa-ken(JP)

(72) Inventor: Ono, Kenzo
2-2, Kurokawa 3-chome
Ohtake-shi Hiroshima-ken(JP)

(74) Representative: Struif, Bernward, Dipl.-Chem. Dr. et al,
Patentanwaltsbüro Tiedtke, Bühling, Kinne Grupe, Pellmann, Grams, Struif Bavariaring 4
D-8000 München 2(DE)

(54) **Flame-retardant resin composition.**

(57) A flame-retardent resin composition comprising a polystyrene type resin; one or more kinds of halogenated compounds; a chlorinated polyethylene; antimony trioxide; one or more of kinds of the compounds of the general formulas II, II, IV and V as defined in the specification; and one or more kinds of halogenated bisphenol type polycarbonate oligomers.

The flame-retardant resin composition has been improved markedly in the light-resistance.

EP 0 183 276 A2

# FLAME-RETARDANT RESIN COMPOSITION

## BACKGROUND OF THE INVENTION

The present invention relates to a flame-retardant resin composition which is excellent in light-resistance.

Recently, the rapid trends towards office automation (O.A.) have been even more accelerated because of the development of various kinds of office appliances. Since almost all of these appliances have internal dielectric parts or portions, they are often required to be self-extinguishing (flame-retardant) when they are exported to foreign countries. In particular, it is necessary for those to the United States to satisfy the requirements in the UL Standards for flame retardancy.

Further, most of these appliances are generally used indoors; however, even indoors, they are sometimes directly or indirectly exposed to light which comes in through windows or to that from fluorescent lamps. Accordingly, the materials for these O.A. appliances are required to be not only self-extinguishing but also excellent in light-resistance.

For the applications mentioned above, there have

frequently been used, in very large quantities, polystyrene type resins which have been made flame-retardant. Therefore, the process of preparing flame-retardant polystyrene type resins has been described in a lot of prior art refernces, e.g., Japanese Unexamined Patent Publicaitons No. 64258/1978 and No. 65741/1983, Japanese Examined Patent Publication No. 32898/1977, etc. However, the inventions disclosed in such prior art references were all intended for rendering the resins flame-retardant or additionally heat-resistant, and were greatly inferior with respect to light-resistance. Therefore, conventionally, as measures to give light-resistance to the resins, an ultraviolet light absorber and a light stabilizer have been generally added either alone or in combination. However, the addition of these agents, which still had little effect of improving light-resistance, was problematic in practical use.

As has been described hereinbefore, flame-retardant formulations which are generally in use have suffered from the drawbacks of being inferior in light-resistance.

The object of the present invention is to overcome the above-described drawback and to provide a resin composition which is not only flame-retardant but also excellent in light-resistance.

## SUMMARY OF THE INVENTION

As a result of extensive investigations, the present inventors have found that the halogenated compound (A) shown by the formula I has a light-resistance improving effect as well as a flame-retardant effect, and, moreover, that the light-resistance of a polystyrene type resin composition is markedly improved by using such a

compound in combination with a specific ultraviolet light absorber and/or light stabilizer, thereby having completed the present invention.

Namely, the flame-retardant resin composition of the present invention comprises, per 100 parts by weight of a polystyrene type resin,

(A) 5 to 32 parts by weight of one or more kinds of halogenated compounds of the general formula I:

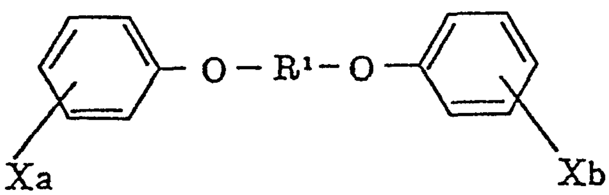

I

wherein $R^1$ represents a group $-C_{\ell}H_{2\ell}-$ in which $\ell$ is an integer of 1 to 4; X represents a bromine atom; and each of a and b represents an integer of 2 to 5,

(B) 0 to 10 parts by weight of a chlorinated polyethylene with a chlorination degree of 25 to 40 per cent by weight,

(C) 2 to 10 parts by weight of antimony trioxide,

(D) 0.1 to 3 parts by weight of one or more kinds of the compounds of the general formulas II, III, IV and V:

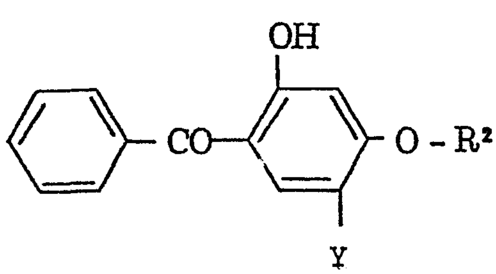

II

wherein $R^2$ represents a group $-C_mH_{2m+1}$ in which m is

an integer of 1 to 18; and Y represents a hydrogen atom or a group $-SO_3H$

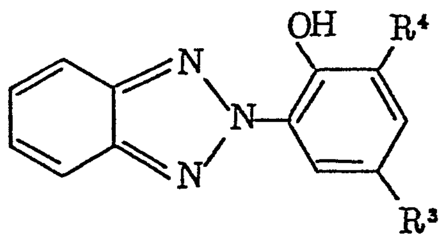

III

wherein $R^3$ represents a group $-C_nH_{2n+1}$ in which n is an integer of 1 to 4; and $R^4$ represents a group $-C_pH_{2p+1}$ in which p is an integer of 0 to 4,

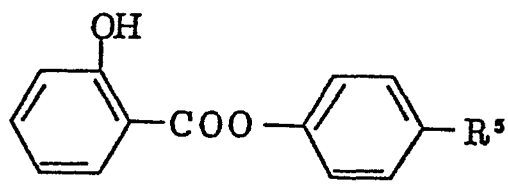

IV

wherein $R^5$ represents a group $-C_qH_{2q+1}$ in which q is an integer of 1 to 8, and

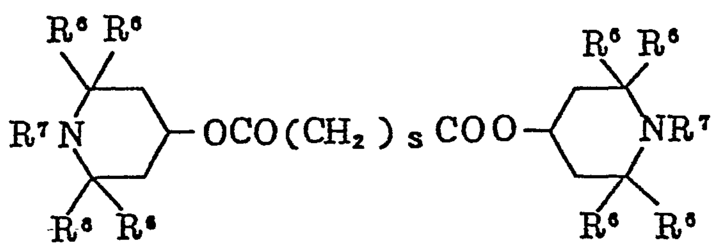

V

wherein $R^6$ represents a group $-C_rH_{2r+1}$ in which r is an integer of 1 to 3; $R^7$ represents a hydrogen atom or a methyl group; and s represents an integer of 2 to 18, and

(E) 0 to 30 parts by weight of one or more kinds of halogenated bisphenol type polycarbonate oligomers.

## DESCRIPTION OF THE PREFERRED EMBODIMENTS

The present invention will be described hereinafter in further detail.

As polystyrene type resins which employed in the present invention, there may be mentioned (co)polymers derived from an aromatic vinyl compound as a principal unit such as a polystyrene, a styrene-acrylonitrile copolymer, an α-methylstyrene-acrylonitrile copolymer, a styrene-acrylonitrile-methyl methacrylate copolymer, a phenylmaleimide-styrene-acrylonitrile copolymer, etc., and resins which have been prepared by rubber-toughening them, e.g. a high-impact polystyrene, an acrylonitrile-butadiene-styrene copolymer, a methyl methacrylate-butadine-styrene copolymer, an acrylonitrile-acrylic acid butyl-styrene copolymer. These polystyrene type resins can be used either alone or in combination, and can be prepared by emulsion polymerization, emulsion suspension polymerization, suspension polymerization, bulk polymerization, etc.

In the present invention, the halogenated compound (A) of formula I not only exhibits a flame-retardant effect but also have a light-resistance improving effect. This light-resistance improving effect of the halogenated compound is an effect which was discovered by the present inventors. As examples of such compounds, there may be mentioned 1,2-bis(2,4-dibromophenoxy)ethane, 1,2-bis-(2,4,6-tribromophenoxy)ethane, 1,2-bis(pentabromophenoxy)ethane, etc. These can be used either alone or in combination. The amount of the halogenated compound (A) to be added is 5 to 32 parts by weight per 100 parts by weight of the polystyrene type resin. If the amount of said compound (A) is less than 5 parts by weight, it is difficult to obtain a sufficient flame-retardant

effect, and if it is over 32 parts by weight, heat-resistance is reduced greatly and the problem of adhesion to mold in molding, which results in deterioration in the appearance of a molded product, tends to occur.

The halogenated compound (A) of formula I has been described in, for example, specifications of U.S. Patents Nos. 4,016,139 and 4,032,507.

In general, the halogenated compounds (A) of formula I are produced by reacting a brominated phenol with a halogenated alkane having a carbon atom number of 1 to 4 at elevated temperatures in the presence of a basic material such as alkali metal hydroxides, carbonates, bicarbonates, oxides and hydrides. The preferred alkali metals are potassium and sodium.

The chlorinated polyethylene (B) with a chlorination degree of 25 to 40 per cent by weight which is used in the present invention is intended for the improvement of flame retardancy and impact resistance, and this may be either crystalline or non-crystalline. If the chlorination degree is beyond said range, the effect of improving flame retardancy and impact resistance tends to become hard to be achieved. The amount of chlorinated polyethylene (B) to be added is 0 to 10 parts by weight per 100 parts by weight of the polystyrene type resin.

In order to improve the impact strength of the present flame-retardant resin composition, the amount of component (B) to be added is up to 10 parts by weight depending on the impact strength required. Due to the addition of component (B), thermal stability shows a tendency to deteriorate slightly, and if the amount exceeds 10 parts by weight, this causes not only a very

great deterioration in thermal stability but also deterioration in heat resistance; therefore it is not preferable.

Next, antimony trioxide (C) in the present invention is used as flame-retardant auxiliary, and the amount thereof to be added is 2 to 10 parts by weight per 100 parts by weight of the polystyrene type resin. If the amount is less than 2 parts by weight, halogenated compound (A) of formula I to be added becomes necessitated in markedly greater amounts; therefore this is not preferable.

In the present invention, compound (D) of the formula II, III, IV, or V is intended for prevention of deterioration in light-resistance of the resin composition by absorbing ultraviolet rays, and the amount of compound (D) to be added is 0.1 to 3 parts by weight, preferably 0.3 to 2 parts by weight. If the amount of compound (D) to be added is less than 0.1 part by weight, a sufficient light-resistance cannot be obtained whereas if the amount is over 3 parts by weight, not only heat resistance deteriorates but also it is uneconomical; therefore, these are not preferable. The compound (D) can be used either alone or in combinaiton so long as the amount to be added is within the above-mentioned range.

The halogenated bisphenol type polycarbonate oligomer (E) used in the present invention, which acts as flame-retardant and in turn has the effect of improving heat resistance, is a compound shown by the following general formula VI or VII.

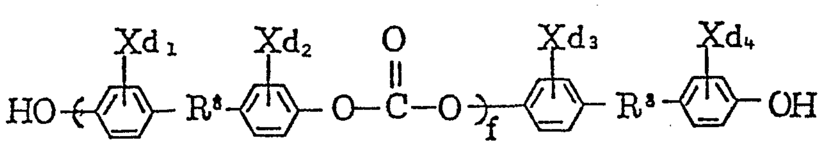

VI

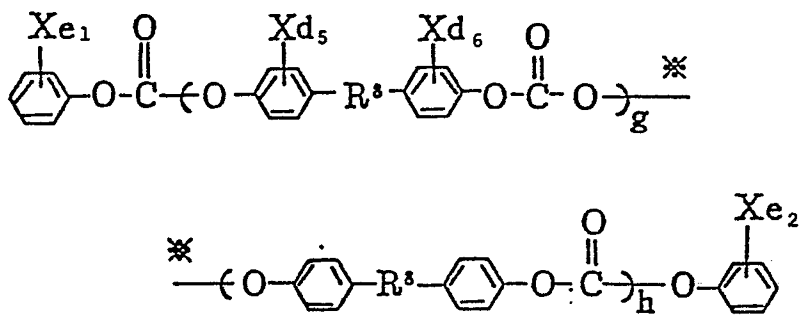

VII

wherein X represents a bromine atom, $R^8$ represents an alkylene group having 1 to 5 carbon atoms, a carbonyl group, a group -O-, a group -S- or a group $-SO_2-$, $d_1$ to $d_6$ may be the same or different and each represent an integer of 1 to 4, $e_1$ and $e_2$ may be the same or different and each represent an integer of 1 to 5, and f, g and h represent the number of repeating units, which are integers of 1 to 50, respectively. The amount of the halogenated bisphenol type polycarbonate oligomer (E) to be added is 0 to 30 parts, preferably 4 to 30 parts by weight per 100 parts by weight of the polystyrene type resin.

The process for preparing the halogenated bisphenol type polycarbonate oligomer (E) is described in Japanese Unexamined Patent Publication No. 65741/1983, according to which the oligomer (E) can be obtained by reacting a halogenated bisphenol compound with phosgene or by reacting a bisphenol compound with a brominated phenol compound.

Further, to the composition of the present invention, generally-used phenol series, phosphite series, thioether series, tin series compounds and other stabilizers, lubricants, fillers, dyes, pigments, etc. can be optionally added.

The preparation method of the present composition is not particularly limited and the composition can be easily prepared by known mixing methods, using known shaping devices.

Hereinafter, the effects of the present invention will be described in detail on the basis of the following Examples and Comparative Examples.

Examples 1-9, Comparative Examples 1-11

Per 100 parts by weight of an acrylonitrile-butadiene-styrene compolymer resin "DIAPET® ABS 7001" (trademark, high-impact ABS resin; manufactured by Mitsubishi Rayon Co., Ltd.), (A) 1,2-bis(2,4,6-tribromophenoxy)ethane, (B) chlorinated polyethylene(G-235; chlorination degree: 35 wt %; manufactured by Osaka Soda Co., Ltd.), (C) antimony trioxide, ($D_1$) 2-hydroxy-4-methoxybenzophenone (Formula II), ($D_2$) 2-(2'-hydroxy-5-methylphenyl)benzotriazole (Formula III), ($D_3$) para-octylphenylsalicylate (Formula IV) and ($D_4$) bis(2,2,6,6,-tetramethyl-4-piperidyl)-sebacate (Formula V) were mixed in proportions shown in Table 1 by means of a Henschel mixer, followed by shaping by means of a 40-mm single-screw vented extruder. Further, as stabilizers, calcium laurate and dibutyltin laurate were added in amounts of 0.5 part by weight, respectively.

Next, from the pellets obtained were prepared light-resistance test pieces (40 x 50 x 3 mm) and UL burning test pieces (5" x 1/2" x 1/12", 130 x 23 x 2 mm) by means of a 2 oz. (56 g) injection molder, and Izod impact test peices (2 1/2" x 1/2" x 1/4", 64 x 23 x 6 mm; notched) and Vicat softening temperature-measuring test pieces (15 x 15 x 6 mm) by means of a 1 oz. (28 g) injection molder. The results are also shown in Table 1.

As is clear from Table 1, in the case of the use of conventional generally-used flame-retardants, deterioration in light-resistance is great (i.e. $\Delta E$ is great), whereas in the case of the present composition, not only the balance of impact resistance and heat resistance is excellent but also light-resistance is satisfactory.

Table 1

| Material No. | | Example | | | | | | | | |
|---|---|---|---|---|---|---|---|---|---|---|
| | | 1 | 2 | 3 | 4 | 5 | 6 | 7 | 8 | 9 |
| Composition (parts by weight) | (A) | 15 | 20 | 30 | 20 | 25 | 20 | 20 | 20 | 20 |
| | (B) | - | - | - | 8 | 3 | 8 | 8 | 8 | 8 |
| | (C) | 10 | 5 | 3 | 3 | 4 | 3 | 3 | 3 | 3 |
| | ($D_1$) | - | - | - | - | - | 1 | - | - | - |
| | ($D_2$) | 2 | 0.5 | 0.5 | 1 | 0.5 | - | - | - | 0.5 |
| | ($D_3$) | - | - | - | - | - | - | 2 | - | - |
| | ($D_4$) | - | - | - | - | - | - | - | 1 | 0.5 |
| | TBA* | - | - | - | - | - | - | - | - | - |
| | DBE* | - | - | - | - | - | - | - | - | - |
| | OBE* | - | - | - | - | - | - | - | - | - |
| Flammability UL-94 | | V-0 | V-0 | V-0 | V-0 | V-0 | V-0 | V-0 | V-0 | V-0 |
| Izod impact strength (kg·cm/cm) | | 14 | 15 | 17 | 20 | 18 | 20 | 18 | 19 | 20 |
| Vicat softening temperature (°C) | | 87 | 87 | 83 | 82 | 82 | 82 | 81 | 82 | 82 |
| Light-resistance ΔE (Color difference) | | 0.6 | 0.8 | 0.9 | 0.7 | 0.8 | 0.7 | 0.6 | 0.7 | 0.6 |

Table 1 (cont'd)

| Material No. | | Comparative Examples | | | | | | | | | | |
|---|---|---|---|---|---|---|---|---|---|---|---|---|
| | | 1 | 2 | 3 | 4 | 5 | 6 | 7 | 8 | 9 | 10 | 11 |
| Composition (parts by weight) | (A) | 15 | 20 | 3 | 20 | 25 | 20 | 20 | - | - | - | - |
| | (B) | - | 8 | - | - | 15 | - | 5 | - | - | - | - |
| | (C) | 10 | 3 | 10 | 1 | 5 | 15 | 3 | 7 | 7 | 5 | 5 |
| | ($D_1$) | - | - | - | - | - | - | - | - | - | - | - |
| | ($D_2$) | - | - | - | - | - | - | 5 | - | 1 | - | - |
| | ($D_3$) | - | - | - | - | - | - | - | - | - | - | - |
| | ($D_4$) | - | - | - | - | - | - | - | - | - | - | - |
| | TBA* | - | - | - | - | - | - | - | 25 | 25 | - | - |
| | DBE* | - | - | - | - | - | - | - | - | - | 20 | - |
| | OBE* | - | - | - | - | - | - | - | - | - | - | 25 |
| Flammability UL-94 | | V-0 | V-0 | HB | V-2 | V-0 | V-0 | V-1 | V-0 | V-0 | V-0 | V-0 |
| Izod impact strength (kg·cm/cm) | | 14 | 20 | 18 | 17 | 20 | 8 | 18 | 9 | 9 | 6 | 20 |
| Vicat softening temperature (°C) | | 89 | 83 | 93 | 87 | 76 | 86 | 74 | 81 | 80 | 95 | 90 |
| Light-resistance ΔE (Color difference) | | 3.7 | 4.2 | 3.5 | 4.0 | 4.6 | 4.1 | 0.6 | 12 | 6 | 18 | 19 |

Test methods (Common to Examples and Comparative Examples described hereinafter).

Izod impact strength: ASTM D-256

Vicat softening temperature: ISO R306

Light-resistance ΔE : Sunshine weatherometer, 63 °C 24-hour exposure without rain.

The color difference between before and after exposure is determined by means of a color difference meter (SM color computer SM 4-2; manufactured by Suga Shikenki (K.K.)).

* TBA: Tetrabromobisphenol A
DBE: Decabromodiphenylether
OBE: Octabromodiphenylether

Examples 10-18, Comparative Examples 12-13

Per 100 parts by weight of an acrylonitrile-butadiene-styrene copolymer resin "DIAPET® ABS 7001" (trademark, high impact ABS resin; manufactured by Mitsubishi Rayon Co., Ltd.), 1,2-bis(2,4,6-tribromophenoxy)ethane as flame-retardant (A), the compound represented by formula VIII set forth infra as flame-retardant (E), antimony trioxide as flame-retardant auxiliary (C), and as component (D), the compounds of ($D_1$) 2-hydroxy-4-methoxy-benzophenone (Formula II),($D_2$) 2-(2'-hydroxy-5-methyl-phenyl)benzotriazole (Formula III), ($D_3$) para-octyl-phenylsalicylate (Formula IV) and ($D_4$) bis(2,2,6,6,-tetramethyl-4-piperidyl)sebacate (Formula V) are mixed in proportions shown in Table 2 by means of a Henschel mixer, followed by shaping by means of a 40-mm single-screw vented extruder. Further, as stabilizers, calcium laurate and dibutyltin laurate were added in amounts of 0.5 part by weight, respectively.

Next, from the pellets obtained were prepared light-resistance test pieces (40 x 50 x 3 mm) and UL burning test pieces (5" x 1/2" x 1/12", 130 x 23 x 2 mm) by means of a 2 oz. (56 g) injection molder, and Izod impact test pieces (2 1/2" x 1/2" x 1/4", 64 x 23 x 6 mm; notched) and Vicat softening temperature-measuring test pieces (15 x 15 x 6 mm) by means of a 1 oz. (28 g) injection molder. The results are also shown in Table 2.

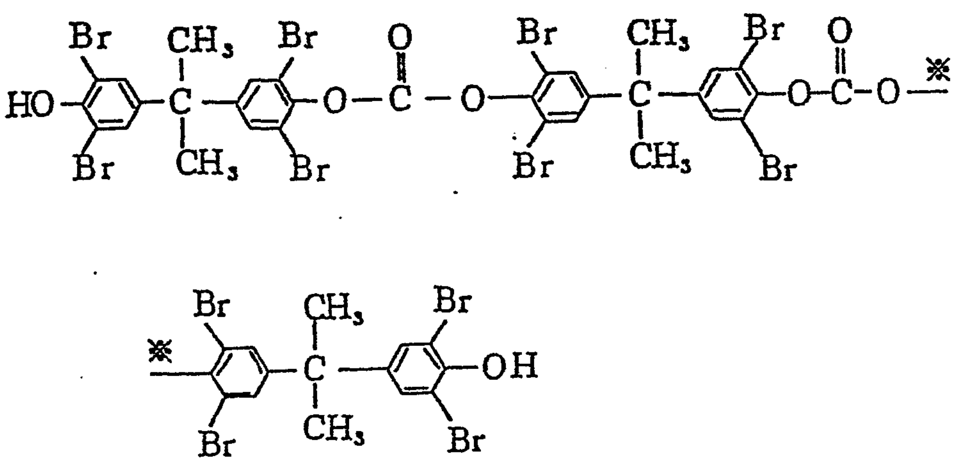

VIII

Table 2

| Material No. | | Examples | | | | | | | | | Comparative Examples | |
|---|---|---|---|---|---|---|---|---|---|---|---|---|
| | | 10 | 11 | 12 | 13 | 14 | 15 | 16 | 17 | 18 | 12 | 13 |
| Composition (parts by weight) | (A) | 4 | 10 | 7 | 15 | 25 | 7 | 7 | 7 | 7 | 4 | 7 |
| | (E) | 20 | 9 | 25 | 10 | 4 | 25 | 25 | 25 | 25 | 35 | - |
| | (C) | 6 | 9 | 2 | 4 | 2 | 2 | 2 | 2 | 2 | 5 | 5 |
| | ($D_1$) | - | - | - | - | - | 1 | - | - | - | - | - |
| | ($D_2$) | - | 1 | 2 | 0.5 | 1 | - | - | - | 0.5 | - | - |
| | ($D_3$) | - | - | - | - | - | - | 1.5 | - | - | - | - |
| | ($D_4$) | - | - | - | - | - | - | - | 1 | 0.5 | - | - |
| | TBA* | - | - | - | - | - | - | - | - | - | - | 25 |
| Flammability UL-94 | | V-0 | V-0 | V-0 | V-0 | V-0 | V-0 | V-0 | V-0 | V-0 | V-0 | V-0 |
| Izod impact strength (kg·cm/cm) | | 14 | 15 | 14 | 17 | 23 | 15 | 14 | 15 | 15 | 6 | 11 |
| Vicat softening temperature ($^oC$) | | 102 | 99 | 100 | 95 | 90 | 101 | 100 | 100 | 100 | 105 | 85 |
| Light-resistance ΔE (Color difference) | | 3 | 0.8 | 0.6 | 0.9 | 0.8 | 0.7 | 0.6 | 0.9 | 0.6 | 2.5 | 10 |

The present invention has markedly improved the light-resistance of a polystyrene type resin composition on the basis of the discovery that the halogenated compound (A) shown by Formula I has a light-resistance improving effect besides a flame-retardant effect, by using such a halogenated compound in combinaiton with a specific ultraviolet light absorber and/or light stabilizer, namely, compound (D) represented by formulas II, III, IV or V. Further, the resin composition of the present invention preserves the characteristics well-balanced in flame retardancy, impact resistance and heat resistance as well, by the addition of a specific chlorinated polyethylene and antimony trioxide.

Moreover, it has become possible to markedly improve heat resistance of a polystyrene type resin by using halogenated bisphenol type polycarbonate oligomer in combination as a flame-retardant.

Thus, in accordance with the present invention, the resin composition can be obtained which is not only flame-retardant but also excellent in light-resistance, and which is sufficiently well-balanced as to other properties as well.

<u>What is claimed is</u>:

1. A flame-retardant resin composition comprising, per 100 parts by weight of a polystyrene type resin,

(A) 5 to 32 parts by weight of one or more kinds of halogenated compounds of the general formula I:

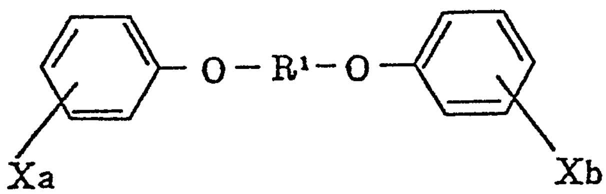

I

wherein $R^1$ represents a group $-C_{\ell} H_{2\ell}-$ in which is an integer of 1 to 4; X represents a bromine atom; and each of <u>a</u> and <u>b</u> represents an integer of 2 to 5,

(B) 0 to 10 parts by weight of a chlorinated polyethylene with a chlorination degree of 25 to 40 per cent by weight,

(C) 2 to 10 parts by weight of antimony trioxide,

(D) 0.1 to 3 parts by weight of one or more kinds of the compounds of the general formulas II, III, IV and V:

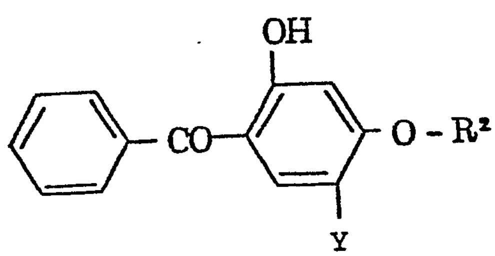

II

wherein $R^2$ represents a group $-C_mH_{2m+1}$ in which m is an integer of 1 to 18; and Y represents a hydrogen atom or a group $-SO_3H$

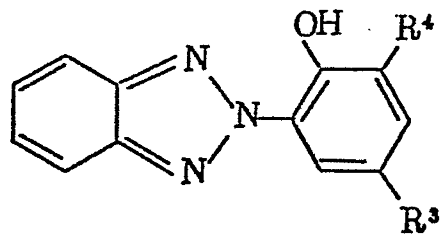

III

wherein $R^3$ represents a group $-C_nH_{2n+1}$ in which n is an integer of 1 to 4; and $R^4$ represents a group $-C_pH_{2p+1}$ in which p is an integer of 0 to 4,

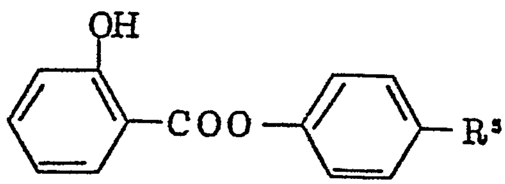

IV

wherein $R^5$ represents a group $-C_qH_{2q+1}$ in which q is an integer of 1 to 8, and

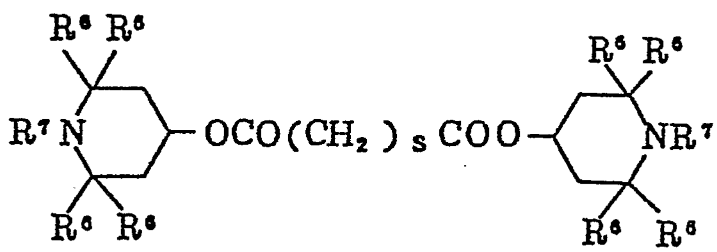

V

wherein $R^6$ represents a group $-C_rH_{2r+1}$ in which r is an integer of 1 to 3; $R^7$ represents a hydrogen atom or a methyl group; and s represents an integer of 2 to 18, and

(E) 0 to 30 parts by weight of one or more kinds of halogenated bisphenol type polycarbonate oligomers.

2. The flame-retardant resin composition according to claim 1, wherein the halogenated compound (A) is 1,2-bis(2,4,6-tribromophenoxy)ethane.

3. The flame-retardant resin composition according to claim 1, wherein the halogenated compound (B) is 1,2-bis(pentabromophenoxy)ethane.

4. The flame-retardant resin composition according to claim 1, wherein the halogenated bisphenol type polycarbonate oligomer (E) is a compound shown by the following general formula VI:

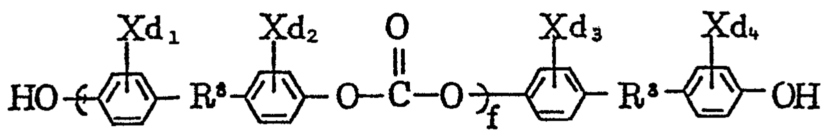 VI

wherein X represents a bromine atom, $R^8$ represents an alkylene group having 1 to 5 carbon atoms, a carbonyl group, a group -O-, a group -S- or a group $-SO_2-$, $d_1$ to $d_4$ may be the same or different and each represent 1 to 4, and f, which represents the number of repeating units, is an integer of 1 to 50.

5. The flame-retardant resin composition according to claim 1, wherein the halogenated bisphenol type polycarbonate oligomer (E) is a compound shown by the following general formula VII.

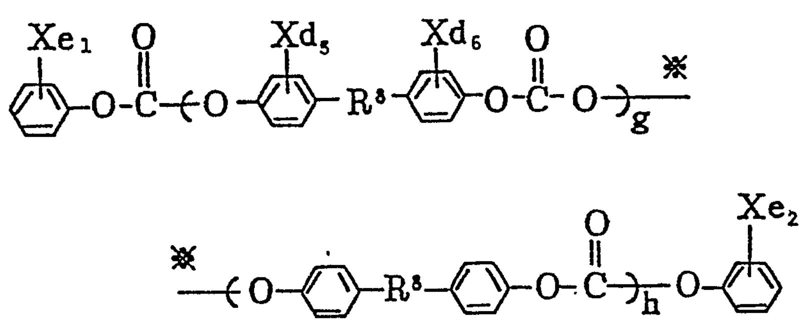 VII

wherein X represents a bromine atom, $R^8$ represents an alkyl group having 1 to 5 carbon atoms, a carbonyl group, a group -O-, a group -S- or a group $-SO_2-$, $d_5$ and $d_6$ may be the same or different and each represent an integer of 1 to 4, $e_1$ and $e_2$ may be the same or different and each represent an integer of 1 to 5, and g and h, which represent the number of repeating units, respectively, are integers of 1 to 50.